# EUROPEAN PATENT APPLICATION

(11) **EP 1 728 614 A2**
(43) Date of publication of application: **06.12.2006**
(21) Application number: 06007430.9
(22) Date of filing: 07.04.2006
(51) Int. Cl.: B29C 45/16, B29C 45/17, B29L 22/00, B29L 31/46, B29L 31/30

(54) **Two-steps injection moulding process for producing hollow plastic automotive parts by using a rotating die apparatus**

(30) Priority: 30.05.2005 IT TV20050073
(71) Applicant: Plastal S.p.A., 33170 Pordenone (IT)
(72) Inventor: Geremia, Maurizio, 31046 Oderzo (TV) (IT)
(74) Representative: Massa, Patrizia

(57) **Abstract**

Bi-stage moulding process of plastic in the automotive, with rotating die apparatus for hollow plastic products of big section, in which the bi-stage moulding process of a product includes a second working stage, where the plastic moulding cycle with gas assisted injection is performed, which is performed under the skin with respect to the element of partial aesthetic coating of the product, said element of partial aesthetic coating being obtained in a previous working stage including a first plastic injection moulding cycle.

## Description

This invention relates to a bi-stage plastic moulding process with rotating die apparatus.

The invention, finds exclusive application in the automotive sector, and in particular in the realization of plastic components of big sections with predominantly aesthetic and functional aims, of the type with closed sections on the transversal plane, for the internal finishing of the vehicle. It is, for example, the case of handles and door handles, pockets for document-holder panels and door side, glove compartment shelves, grab handles, front windows with dashboard-glass coupling profile.

For example, in the sector of handles in the automotive, it is known that door handles are components which, on one hand, need aesthetic characteristics as clearly such elements are necessarily well visible having to be easily held, while on the other hand, they are conditioned by the fact of requiring an intrinsic structural rigidity, having to mechanically support a pulling force at least proportioned to the weight of the door to be closed. These components, as well as the others listed above, which have to answer to characteristics described that substantially unite them, are nowadays obtained mainly with a plastic moulding technique with assisted gas injection.

Moreover, the choice of other moulding techniques, which achieve a conventional product therefore with a full big section, rather than hollow, are not appreciably feasible, both from a technical-functional and a financial point of view. In other words, hypothesising to carry out the moulding of products according to less sophisticated techniques, for example with a common injection moulding technique (without the support of the emptying phase with gas), the full product being of a big section, would require substantially too long cooling times. In other words, the completion of the cooling phase, which involves a progressive formation of the skin that must reach the core of the product, will be a very difficult result to achieve the greater the diameter of the product is.

Other factors which noticeably condition the choice of the plastic moulding technique with gas injection, rather than other conventional techniques, are dictated by the fact that less plastic is used, with a significant reduction of the weight, without compromising the good mechanical characteristics.

In principle, injection moulding is used for thermoplastic resins. It can be stated that generally, a press is made up of a couple of vertical planes to which the die is fixed. The planes, by moving horizontally, determine the opening and closing of the die itself. An injection assembly, in which the material is heated until in a plastic state, for example with screw or piston, causes, by means of an axial movement, the charging of the starting material and simultaneously the injection of the fluidized material into the die. The latter notoriously consists of a matrix and a punch, both integrating heating planes.

In the case of the moulding cycle where there is an emptying phase by means of a gas, which is therefore particularly suitable for creating cavities and channels especially conceived inside the moulded pieces, therefore following the injection phase of the fluidized plastic in the die, there will be a phase of partial or controlled emptying of the plastic, carried out by means of the introduction of inert agents. Among these, there is nitrogen in a gaseous form, which is particularly suitable for the creation of inert atmospheres in different industrial and technological areas by virtue of its poor reactivity, its abundance and its low cost. This technology substantially offers greater freedom in the design of components, a reduction in weight, a reduction in the costs, an improvement in the aesthetic aspect and a reduction in moulding times. From a practical point of view, the dies conventionally used for gas assisted injection moulding, with respect to conventional ones, are structured in such a way as to provide at least one nozzle for the entry of the gas (some recent techniques provide the use of water alternatively or complementarily to the gas) with a channel for emptying. They provide moreover, an exit well of the gas, with an annexed collection basin of the excess plastic.

The traditional gas-assisted injection moulding cycle provides substantially the following steps:
a) Die closure
b) Injection, filling the die with thermoplastic resin
c) Introduction of gas and/or water into the die, emptying and simultaneously opening of the overflow well
d) Compacting/cooling
e) Die opening.

Moulding techniques of such a type are therefore known in the automotive sector.

For example EP0736418 (Maki et al.) describes a plastic product, realized in such a way, which has a gas channel that is extended longitudinally, in an intermediate position of the product, obtained at the back part. The opening for the gas injection is situated at one end of the hollow portion of the channel and gradually changes towards the end. The opening for the gas injection is diverted in the direction of the width at the opposite end of the hollow channel. A gas exit door is obtained at the opposite end of the hollow channel.

Also EP0881052 (Herlache) proposes a hollow product for the automotive, of the type that contains electric cables. The process provides the phases to mould a cavity in the die, in the shape of a plastic article, having a surface area segment defining a passage in the cavity of the die; injection of the hot liquid plastic into the cavity of the die, which is cooled by the surface area segment of the die cavity, to form a solidified tubular wall in the passage having liquid plastic therein; gas injection in the die cavity into the liquid plastic in the tubular wall, to expel the liquid plastic from within the tubular wall, in such a way that a gas-filled elongated void is formed along the tubular wall, until all the liquid plastic in the die cavity is solidified; removal of the moulded article from the die cavity, and opening of the elongated void.

### Disadvantages

The solution of gas assisted injection moulding, even though efficient poses some realization limits, and in particular in relation to the shapes and sizes. Fundamentally, it can be stated that said technique lends itself to carry out of work where preferably circular, oval or rounded sections are required, projected longitudinally. It is true that the achievement of shapes with sections different from that described, like for example shapes that have polygonal sections, involve substandard aesthetic results. In other words, superficially, anti-aesthetic phenomena can become evident, for example blowholes, in practice light depressions, which substantially are caused by the natural withdrawal of the material in a section or a thickness of the wall of the hollow product, which is not constant, not contiguous.

A second, non negligible aesthetic deficiency, still noticeable in big section products, are halo effects. In substance, this is opacity, noticeable still superficially, particularly anti-aesthetic, the cause of which is to be found in the practical impossibility in achieving a uniform cooling of the product. Also in this case, this is determined by the practical impossibility of achieving a product of constant thickness, due to the fact that the two skins that tend to be formed, respectively the external and internal of the hollow product, during moulding have different progression times and temperatures.

A third defect, still in reference to the difference in the thickness noticeable along the wall of the hollow product, are deformations of a generalized order, in practice the unevenness of the visible surfaces that superficially can realize the aesthetic flaw and make the product of an all-in-all low quality.

### Prior art closest to the invention

In the site http:/www.hbgroup.it/ a cutting tool is illustrated, which has the name Rotello, created in 2001 to satisfy particular needs expressed by users with serious limitations in the performance of superior art. The handle, as stated by the writer, is considered for different grip situations, by nature it can not be of contained sizes. The considerable thickness, necessary to make it comfortable also for those who have no strength to grip, if realized with traditional plastic moulding techniques, it would be obliged to have a considerable weight and therefore would create grounds for difficulties and would not be of help. For this reason, as a planning choice, the use of gas assisted injection moulding is suggested. In this way, it is possible to obtain a very light handle as it is hollow, extremely resistant and free from distortions. In the upper part of the handle an overmoulding in soft-touch material is provided which, as well as increasing the aesthetic quality, also makes the use of the tool more comfortable and secure. The material suggested for the moulding is rigid Polypropylene (PP) for the body of the handle, and still Polypropylene, but soft and with a soft-touch finishing for the overmoulding. The use of two homologous materials allows an easy moulding and a duration security of the adhesion of the two different materials.

Further constructive details are not known.

Hence, the need for companies, particularly of the automotive sector, to identify more effective alternative solutions with respect to the solutions in existence up to now.

The aim of this invention is also that of avoiding the described disadvantages.

### Brief description of the invention

This and other aims are reached with this invention according to the characteristics of the included claims solving the problems shown by means of a bi-stage moulding process of plastic in the automotive, with rotating die apparatus for hollow plastic products of big section, in which the bi-stage moulding process of a product includes a second working stage, where the plastic moulding cycle with gas assisted injection is performed, which is performed under the skin with respect to the element of partial aesthetic coating of the product, said element of partial aesthetic coating being obtained in a previous working stage including a first cycle of plastic injection moulding.

### Aims

In this way, through the considerable creative contribution, the effect of which has allowed to achieve considerable technical progress, some aims and advantages are reached.

A first aim has understood to achieve an optimized process to obtain a product in plastic for the automotive, provided with an extraordinary aesthetic quality.

In detail, the fact of obtaining in a first stage a first part of the subsequent product, or a partial coating, with aesthetic functions, like a half-shell, obtained by means of an injection moulding process, allows the achievement of surfaces, especially on the visible facade of said aesthetic coating, substantially without defects, therefore blowholes, halo effects and generalized deformations. The advantage appears intuitable, as conventional injection moulding, from which the aesthetic coating of the product under consideration is obtained, allows to act in an extremely effective way, from a qualitative point of view, which functions with respect to shapes where the thickness is optimized, depending on the achievement of the best possible cooling.

A second advantage can be found in the fact that those original limits are removed, in the traditional working techniques that concerned the impossibility of obtaining sections not conditioned by rounded forms, as well as products of also large sizes.

A third aim has consisted in realizing a structure with a good degree of resistance to deformation, also torsional deformation, sufficiently robust and easy to support loads more than the usual capacities.

A fourth aim, finally, relates to the fact of being able to give different degrees of finishing to the coating portion, with aesthetic aims.

### COMPARISON WITH THE PRE-EXISTING SOLUTIONS

EP0736418 (Maki et al.) and EP0881052 (Herlache) describe products for the automotive, obtained by processes for the single injection moulding or gas assisted injection moulding (for example see table A related to prior art). Moreover, they use conventional presses. This invention, on the contrary, provides a combined process of the two mentioned moulding techniques, with a rotating die machine.

Regarding the technique described in the site http:/www.hbgroup.it/, though stating a phase of overmoulding, there is not sufficient information available suitable for comparison.

In conclusion, it has been possible to use a process from which a structure without defects is obtained, at least on the visible side, more integrated, compact, provided with at least greater comfort and ease of use, with good technological content and costs comparable to the most current solutions.

These and other advantages will appear from the following detailed description of a preferred solution with the aid of the enclosed schematic drawings, whose details of execution are not to be considered limitative but only illustrative.

### Content of the drawings

Figure 1, is a view, according to a cross section, of a die in a closed condition, for the execution, by means of injection moulding, of an element of partial aesthetic coating;
Figure 2, is a view according to a cross section, of a second die in a closed condition, for the execution, under the skin, by means of gas assisted injection moulding of the hollow support component of the element of aesthetic coating;
Figure 3, is a sectional view on the transversal plane of the product for the automotive obtained in plastic, realized according this invention.
Figure 4, is a sectional view on the transversal plane of the element of partial aesthetic coating of the product as in Figure 3;
Figure 5, is a sectional view on the transversal plane of the support of the element of partial aesthetic coating as in Figure 4.

### Realization of the invention

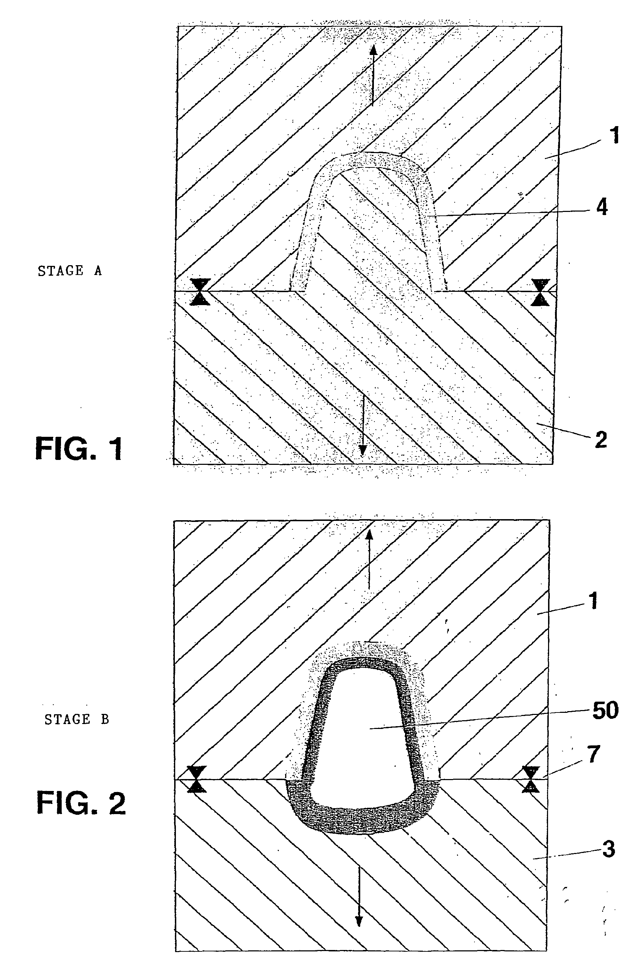

With reference to the object of the invention, it is observed that the bi-stage moulding process of plastic in the automotive, with rotating die apparatus for hollow plastic products of big section 6, for example a door handle, requires the predisposition of a rotating die apparatus, composed essentially of a station for the traditional injection moulding (see Figure 1), which effectively combines a matrix 1 and a punch 2, and a second station (see Figure 2) adjacent to said first, including a second matrix 3, for the gas and/or liquid assisted injection moulding on the overinjected aesthetic element 4, of the hollow support component 5.

The moulding process of the plastic product of big section 6, provides therefore two working stages, respectively a first, represented schematically in Figure 1, defined STAGE A, where the element of partial aesthetic coating 4 is realized, and a second (Figure 2) defined STAGE B, immediately following said first, in which the hollow support component 5 of the element of partial aesthetic coating 4 is realized.

For both working stages A and B, the plastic that is used, can be a thermoplastic, in this case PA (polyamide), for example nylon, or styrene such as ABS (Acrylonitrile-Butadiene-Styrene copolymer) or ABS + PC (Acrylonitrile-Butadiene-Styrene and polycarbonates) and finally PP (polypropylene). Moreover, it is observed that it is not necessary that the same plastic is used in both working stages, but it is sufficient that between them a compatibility relation exists for the coupling.

Once the rotating die apparatus is predisposed, a first cycle is executed, corresponding to the first working stage (Figure 1, STAGE A) where the subsequent phases are followed:
a) Die closure 1, 2
b) Injection, filling the die 1, 2 with plastic, achieving an aesthetic coating element 4
c) Compacting, cooling
d) Die opening 1, 2
Upon reaching phase d) at least the following intermediate phase e) follows, in which essentially the following is provided:
e) Die rotation 1, 2, with the aesthetic coating element 4 that remains on the matrix 1 to which the punch 2 will be removed and replaced by the second matrix 3 (female) that shuts and completes the section of the matrix 1. Said second matrix 3 is of the type provided with entry and exit nozzles for the input of gas and/or water, in order to obtain the subsequent hollow 50.
Upon completion of the predisposition of the die 1, 3 of the intermediate phase e), STAGE B is started, where the following working cycle is carried out
f) Die closure 1, 3
g) Injection, filling the die 1, 3 with plastic taking the shape of the support component 5
h) Introduction into the die 1, 3 of gas and/or water, emptying, obtaining a hollow section 50 and simultaneous opening of the overflow well
i) Compacting/cooling
j) Die opening.

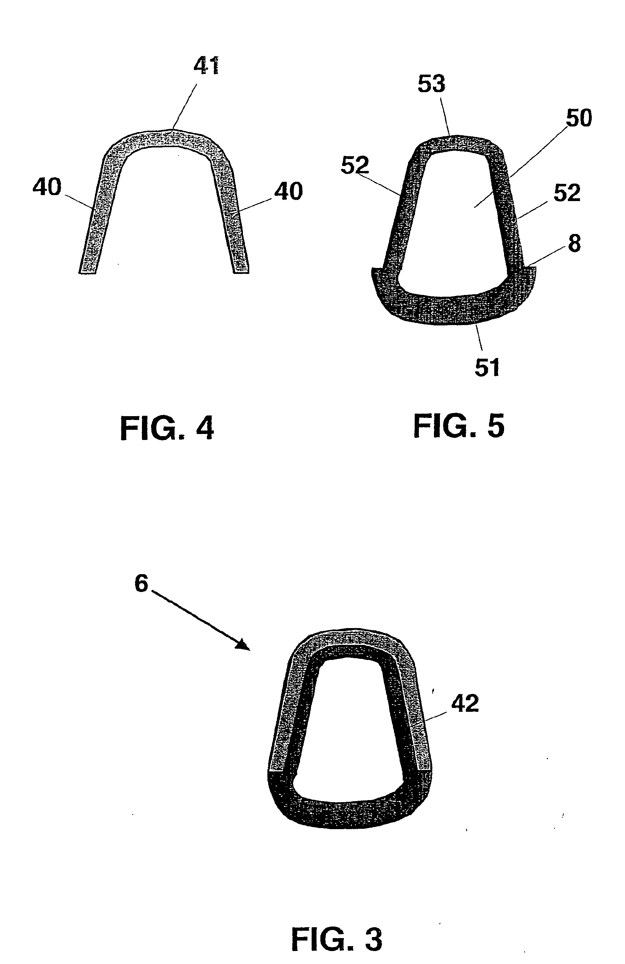

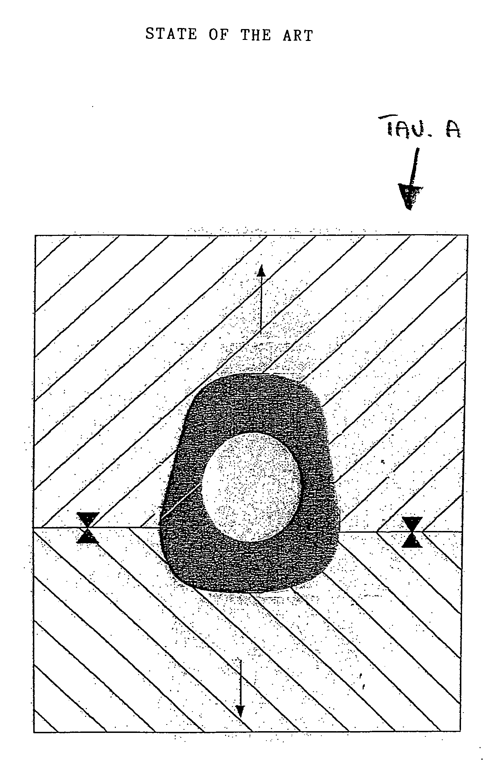

The product 6 obtained in such a way, (see Figure 3) in this case, consists of a door handle, therefore a plastic body including an aesthetic coating element 4, that, as such, in a mounted condition in the vehicle, is the most visible part. It is characterised by a section on a transverse plane with a «U» projected longitudinally, with walls 40 and a connecting profile 41, which has a constant thickness, in which the walls 40 are substantially diverging. Inside said aesthetic coating element 4, the support component 5 is overinjected, obtained with the same plastic or with a compatible plastic. The support component 5, is provided with a body with a ring-closed section, with a rounded profile on the corners, internally hollow 50, with a bottom 51, and portions under the skin with respect to the aesthetic coating element 4 made up of converging walls 52 and a connecting upper profile 53. Both the converging walls 52 and the connecting upper profile 53 are counter-shaped with respect to the coupling interface 42 of the aesthetic coating element 4. In this case, it is observed that the thickness of the converging walls 52 and the connecting upper profile 53, is less with respect to that of the bottom 51 in such a way as to obtain, on the parting line 7 between the first 1 and second matrix 3 and on both sides, a tooth 8, the width of which is at least equal to the thickness of the walls 40 of the aesthetic coating element 4. In this way the total thickness of the product 6 is substantially uniform.

## Claims

1. Bi-stage moulding process of plastic in the automotive, with rotating die apparatus for hollow plastic products of big section, **characterised in that** the bi-stage process of a product includes a second working stage B, where the plastic moulding cycle with gas assisted injection is carried out, which is carried out under the skin with respect to the partial aesthetic coating element 4 of the product 6, said partial aesthetic coating element 4 being obtained in a previous working stage A including a first injection plastic moulding cycle.

2. Bi-stage moulding process of plastic in the automotive, with rotating die apparatus **characterised in that** it provides a first working stage, STAGE A, where the following phases are carried out:
a) Die closure 1, 2
b) Injection, filling the die 1, 2 with plastic, achieving an aesthetic coating element 4
c) Compacting, cooling
d) Die opening 1, 2
upon reaching the phase d) at least the following intermediate phase e) follows, in which is the following is provided:
e) Die rotation 1, 2, with the aesthetic coating element 4 that remains on the matrix 1 to which the punch 2 is removed and replaced by the second matrix 3 (female) that closes and completes the section of the matrix 1 and in which said second matrix 3 is of the type provided with entry and exit nozzles for the input of gas and/or water, in order to obtain the subsequent hollow 50.
Start of STAGE B, where the cycle is carried out which includes the following phases:
f) Die closure 1, 3
g) injection filling the die 1, 3 with plastic, taking the shape of the support component 5
h) Introduction into the die 1, 3 of gas and/or water, emptying, obtaining a hollow section 50 and simultaneously opening the overflow well
i) Compacting/cooling
j) Die opening.

3. Bi-stage moulding process of plastic in the automotive, with rotating die apparatus **characterised in that** the rotating die apparatus, is essentially composed of a station for the traditional injection moulding that effectively combines a matrix 1 and a punch 2, and a second station adjacent to said first, including a second matrix 3 which replaces the punch 2, for the gas and/or liquid assisted injection moulding on the overinjected aesthetic element 4, of the hollow support component 5.

4. Bi-stage moulding process of plastic in the automotive, with rotating die apparatus **characterised in that** in the plastic product 6, the thickness of the converging walls 52 and the connecting upper profile 53 is less with respect to that of the bottom 51 in such a way as to obtain, at the parting line 7 between the first 1 and second matrix 3 and on both sides, a tooth 8, the width of which is at least equal to the thickness of the walls 40 of the aesthetic coating element 4.
